# EUROPEAN PATENT APPLICATION

(11) **EP 1 870 215 A1**
(43) Date of publication of application: **26.12.2007**
(21) Application number: 06012900.4
(22) Date of filing: 22.06.2006
(51) Int. Cl.: B25J 19/02, B25J 13/00

(54) **Robot head with artificial ears**

(71) Applicant: Honda Research Institute Europe GmbH, 63073 Offenbach/Main (DE)
(72) Inventor: Joublin, Frank, Dr., 63533 Mainhausen (DE)
(74) Representative: Rupp, Christian

(57) **Abstract**

A supporting head (18) is provided with binaural artificial ears (1), which respectively comprise an auricle-shaped structure (3) and a microphone (6).
In order to enhance auditory localisation cues, at least the upper part of the head presents an acoustically dampening surface.

## Description

### Background:

The present invention relates to the field of heads of robots, wherein the heads are equipped with dedicated acoustical sensing systems, which will be called "artificial ears" in the following. An artificial ear comprises at least a microphone and a sound-guiding element, which will be called an artificial auricle in the framework of the present description and the enclosed claims.

Just to cite one example, the invention can be used for a humanoid robot which is characterised in that it generally has the set-up of a human body comprising a body, legs, arms and a head. The artificial ears according to the present invention are particularly designed to be attached to or integrated in the head of the humanoid robot.

The invention therefore can not be compared with dummy heads having a binaural stereo microphone, where the target is to build a dummy head and the binaural stereo microphone as close as possible as a replica of the human head and ears. Such dummy heads can be used e.g. for dummy head recording by using an artificial model of a human head, built to emulate the sound-transmitting characteristics of a real human head, with two microphone inserts embedded at "eardrum" locations.

### Object of the invention:

It is the object of the present invention to propose a head of a robot equipped with artificial binaural ears.

### Short description of the solution of the object:

This object is achieved by means of the features of the independent claims.

The dependent claims develop further the central idea of the present invention.

According to one aspect the invention proposes a head for a robot which comprises actuator means in order to move the head in at least one degree of freedom in order to gaze at the estimated position of a detected sound source. The head is provided with binaural artificial ears, which respectively comprise an auricle-shaped structure and a microphone. The upper part of the head presents a acoustically dampening surface.

The artificial ears can be functionally connected with computing means inside our outside the head, which computing means are designed for estimating the position of a sound source based on auditory localisation cues, such as e.g. ITD and/or ILD.

The acoustically dampening surface can be effective for frequencies above 2kHz.

The acoustically dampening surface can be effective for acoustical waves having a wavelength of equal to or less than the distance of the two microphones of the binaural artificial ears.

The acoustically dampening surface can be a surface layer attached to the head.

The acoustically dampening surface can be made from a silicone-like material.

The acoustically dampening surface can be formed by a surface treatment of the head.

A further aspect of the present invention relates to a humanoid robot having a body, two legs, two arms and a head according to any of the preceding claims.

A still further aspect of the invention relates to a method for enhancing auditory localisation cues sensed via binaural artificial ears attached to or integrated into the head of a robot,
the method comprising the step of providing at least the upper part of the head with an acoustically dampening surface.

### Short description of the figures of the enclosed drawings:

Further advantages, features and objects of the present invention will become evident for the skilled person when going through the enclosed detailed description of preferred embodiments taken in conjunction with the figures of the enclosed drawings.
- Figure 1 shows a perspective view of an artificial ear according to the present invention.
- Figure 2 shows a side view of an artificial ear with acoustically transparent cover,
- Figure 3 shows a humanoid robot in connection with which the present invention can be used, and
- Figure 4 shows a robot head according to the present invention.

### Detailed description of preferred embodiments:

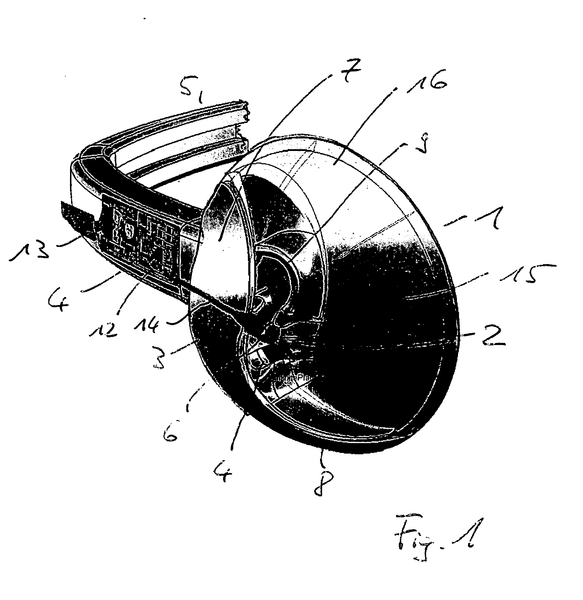

In figure 1 the reference sign 1 generally designates an artificial ear according to the present invention.

As it is already visible from figure 1, it is not the aim of the present invention to make a replica of the human ear, but to make an artificial ear adapted for use with robots and particularly robot heads.

The artificial ear 1 according to the present invention has a preferably circular ground base plate 2. An auricle-shaped structure 3 extends to the outside of the base plate 2. At the rear end of the auricle-shaped member 3 and extension 4 is integrated which can house, e.g. an electrical circuitry 12, such as for example preamplifying means. The electrical circuitry 12 is provided with an interface 13 in order to forward the preprocessed electrical signals e.g. to a computing unit of a robot. The computing unit can then e.g. determine targets of motion of the robot based on the processed signals, e.g. by carrying out a localisation estimation of sound sources in order to have humanoid robot focus on or move to the estimated position of the sound source.

This longitudinal extension 4 can be extended (see 5) in order to represent an elastic and bendable mechanical connection member (which can also be used for electronic and electrical connection) to a second artificial ear arranged symmetrically to the artificial ear 1 shown in figure 1.

The auricle-shaped structure 3 of the artificial ear 1 defines a hollow concha region 4, in the acoustical centre of which a microphone 6 is placed. The hollow concha region 4 can present the shape of a cone enhancing acoustical signals coming from the front. The concha region is a hollow which is defined in the auricle-shaped structure, which opens to the outside and which connects the microphone to the outside, the microphone being placed in the bottom of the concha region.

The microphone 6 is in functional connection 14 with the processing circuitry 12 for signals detected by the microphone 6.

As can be seen from figure 1, the rear end and/or the lower end of the auricle-shaped structure 3 can be provided with acoustical shielding/shadowing means 7, 8. These acoustical shadowing means 7, 8 are designed to shadow noise originating from noise sources at a position to the rear and/or the below the artificial ear 1.

The shielding means 7, 8 can have the shape of a folded over outside edge of the auricle-shaped structure 3.

Preferably the rear shielding means 7 essentially cover the concha region 4 an at least partially overlapping manner in order to shield the artificial ear 1 efficiently against typical noise sources behind the artificial ear 1.

On the other hand, the width of the lower shielding means 8 can be made much smaller than the width of the rear shielding means 7 such that the overlap from the lower shielding means 8 with the base plate 2 is much smaller than the corresponding overlap of the rear shielding means 7 with the base plate 2.

Preferably the upper region 16 and/or the front region 15 of the artificial ear is (acoustically) completely exposed, i.e. any sound originating from a sound source above and/or in front (i.e. to the right in figure 1) of the artificial ear 1 is allowed to enter the hollow concha region 4 and then the microphone 6.

Inside the concha area 4, inner pinnae elements 9 can be arranged which are designed to break the symmetry between sound signals coming from above the artificial ear 1 and from a position below the artificial ear 1, respectively.

The inner pinnae elements 9 are designed to enhance 3D localization cues and enhance front signals.

The asymmetry introduced by the inner pinnea elements 9 and the amplification of front source signals contributes to a better separation of ILD cues from the front and the back, respectively.

The artificial ear 1, due to the arrangement of the acoustical shielding means 7, 8 is particularly suited for a humanoid robot with a noise source, which is part of the robot, such for example a fan, and which is arranged below and/or be rearwards of the artificial ear 1.

Furthermore, due to the arrangement of the acoustical shielding means 7, 8 and the inner pinnae elements 9 this ear is particularly suited for selectively receiving signals from a sound source being in front of the robot equipped with the artificial ear 1 and being slightly higher than the position of the artificial ear 1.

Therefore the shown artificial ear 1 is particularly adapted for use on a robotic head of the humanoid robot which has a size smaller than human beings, and wherein the humanoid robot is designed to communicate with human beings.

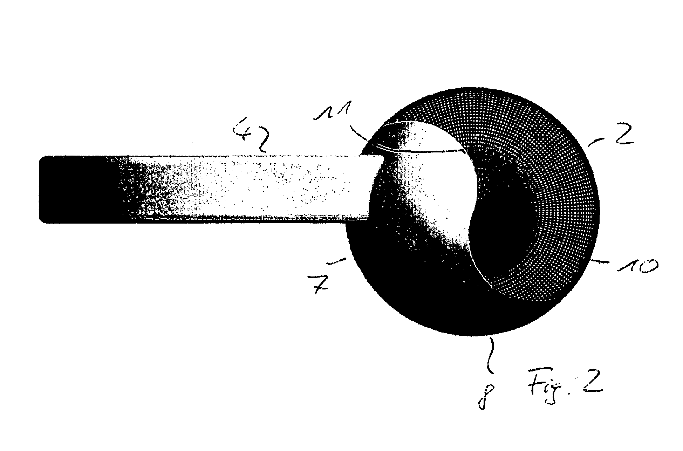

Figure 2 shows a side view of an artificial ear 1 according to the present invention.

The basic contour is defined by the base plate 2 which is symmetrical.

As can be seen from figure 2, the upper and front part of the artificial ear 1 can be covered by an acoustically transparent and optionally replaceable cover 10. The acoustically transparent cover 10 can be made from a porous or grid-like material.

Preferably the division line between the acoustically transparent cover 10 and the acoustical shielding means 7, 8 has the shape of a "S" or an inverted "S".

The division line 11 between these two cover parts 10 and 7, 8, respectively is a combination of a convex and a concave segment.

It has been found out that this separation between the overlapping shielding means 7, 8 (being an extension of the folded over outer edge of the auricle-shaped structure 3) and the acoustically transparent cover 11 is particularly adapted for heads of humanoid robots. It is particularly suited for robots having a size equal to or smaller than adult human beings, i.e. 160cm or smaller, and which are designed for a acoustic (voice) communication with human beings.

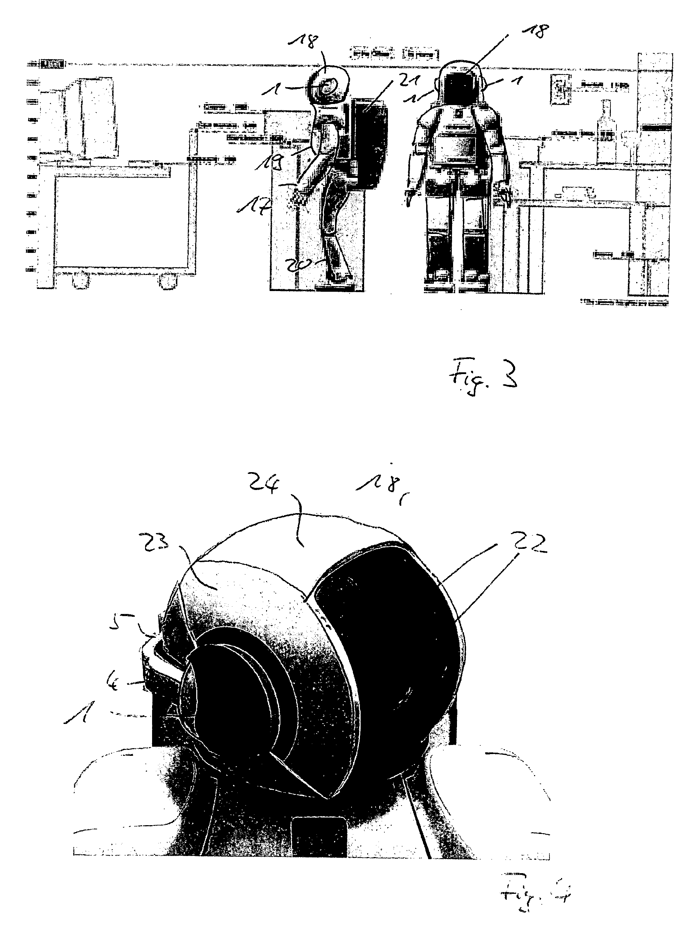

Figure 3 shows an example of such a humanoid robot. The example more particularly shows Honda's ASIMO robot which is a biped humanoid robot with a two arms 17, a head 18 equipped with two cameras at the front (see figure 4 for details), a body 19, two legs 20 and a backpack 21 containing a battery. The backpack can furthermore house a cooling fan which represents a noise source from which the artificial ears 1 arranged at the two lateral faces of the head 18 of the humanoid robot are to be shielded.

Figure 3 serves for illustration purposes only. Note that the invention can be used in connection with any mobile or static support for artificial ears. The term "head" has only be used for illustration purposes. The "head" simply has to support the artificial ears at a certain distance to each other.

The head can be mounted on a mobile (rolling, walking,...) support or on a static support. The head can simply be mounted to any other support structure and can be moveable vis-à-vis its support or not.

Figure 4 shows the head of a head of a robot 18 with the two cameras 22 at its front. The artificial ears 1 are connected to each other by an elastic element 5 and can be removable as a earphone-like unit from the head 18.

Alternatively the auricle-shaped structure 3 of the artificial ears 1 can be an integral part of the head 18.

The arrangement of the artificial ears 1 on a robot head 18 as shown in figure 4 has as a result that the two microphones 6 are then located at some distance of each other allows, which allows the perception of Interaural Time Differences (ITD) that can serve the localization of the source direction within a so-called cone of confusion.

The head 18 between the microphones' position is chosen to have a shadow effect on the sound level in order to improve the Interaural Level Differences (ILD).

As already shortly explained above, the head 18 can be moved towards an estimated position of a localized sound source. This movement can neither be done by a relative movement, especially a rotation of the head 18 relative to the body 19 of the robot, and/or a full body motion of the entire robot in order to have the head 18 gazed towards an estimated position of the sound source.

It is well known from the prior art that auditory cue signals can be used in order to carry out a localization, e.g. the estimation of a position of a sound source.

As an example for such cues the interaural time differences (ITD) as well as the interaural level differences (ILD) should be mentioned.

To summarize, via the artificial ears 1 sound signals are sensed, which are then processed by a computing unit of the robot in order to extract the auditory cues. For example by mapping the auditory cues to a coordinate system a position of a sound source can be estimated and a corresponding actuation command to the head 18 and/or other parts of the robot can be issued in order to have the front face of the head 18 gazed towards the estimated position of the sound source.

In order to enhance the auditory cue signals, the invention proposes to cover at least a part of the head 18 with an acoustically dampening surface adapted for reducing acoustical reflections on the head 18.

As shows in Fig. 4, the acoustically dampening surface can be e.g. the lateral face 23 surrounding the artificial ears 1 and particularly the upper part 24 of the head 18.

In order to promote the detection of auditory cues of voice signals, it is preferred that the acoustically dampening surface is particularly effective for frequencies starting from 2 kHz.

The acoustically dampening surface can be formed such that it is particularly effective for acoustical waves having a wave length of equal 2 or less than the distance between the two microphones 6 of the binaural artificial ears 1.

The acoustically dampening surface can be a surface layer, made e.g. from a silicon material, attached to at least a portion of the head 18. Additionally or alternatively the acoustically dampening surface can be formed by a surface of the head 18, e.g. by ensuring that the head surface is provided with acoustically dampening corrugations.

## Claims

1. A supporting head being provided with binaural artificial ears, which ears respectively comprise an auricle-shaped structure and a microphone,
wherein at least the upper part of the head presents a acoustically dampening surface.

2. The head according to claim 1,
wherein it is provided with actuator means for moving the head towards an estimated position of a sound source.

3. The head according to claim 2,
wherein the artificial ears are functionally connected with computing means which are designed for estimating the position of a sound source based on auditory localisation cues, such as e.g. ITD and/or ILD.

4. The head according to claim any of the preceding claims,
wherein the acoustically dampening surface is effective for frequencies above 2kHz.

5. The head according to claim 1,
wherein the acoustically dampening surface is effective for acoustical waves having a wavelength of equal to or less than the distance of the two microphones of the binaural artificial ears.

6. The head according to any of the preceding claims,
wherein the acoustically dampening surface is a surface layer attached to the head.

7. The head according to claim 6,
wherein the acoustically dampening surface is made from a silicone-like material.

8. The head according to any of any of claims 1 to 5,
wherein the acoustically dampening surface formed by a surface treatment of the head.

9. A humanoid robot having a body, two legs, two arms and a head according to any of the preceding claims.

10. A method for enhancing auditory localisation cues sensed via binaural artificial ears attached to or integrated into a supporting head , the method comprising the step of providing at least the upper part of the head with an acoustically dampening surface.

11. The method according to claim 10,
wherein the acoustically dampening surface is selected to be effective for frequencies above 2kHz.

12. The method according to claim 10 or 11,
wherein the acoustically dampening surface is selected to be effective for acoustical waves having a wavelength of equal to or less than the distance of the two microphones of the binaural artificial ears.

13. The method according to any of claims 10 to 12,
wherein the acoustically dampening surface is formed by attaching a surface layer to the head.

14. The method according to claim 13,
wherein the acoustically dampening surface is made from a silicone-like material.

15. The method according to any of claims 10 to 12,
wherein the acoustically dampening surface is formed by a surface treatment of the head.

## Amended claims

### Amended claims in accordance with Rule 137(2) EPC.

**1.** A supporting head being provided with binaural artificial ears, which ears respectively comprise an auricle-shaped structure and a microphone,
wherein at least the outer surface of the upper part of the head presents a acoustically dampening surface.

**10.** A method for enhancing auditory localisation cues sensed via binaural artificial ears attached to or integrated into a supporting head ,
the method comprising the step of providing at least the outer surface of the upper part of the head with an acoustically dampening surface.
